# EUROPÄISCHE PATENTANMELDUNG

(11) **EP 1 043 089 A2**
(43) Veröffentlichungstag der Anmeldung: **11.10.2000**
(21) Anmeldenummer: 00106299.1
(22) Anmeldetag: 23.03.2000
(51) Int. Cl.: B21D 19/00, B23K 37/04

(54) **Verfahren und Anlage zum Bearbeiten und Verbinden der Kanten von Blechen o.dgl.**

(30) Priorität: 03.04.1999 DE 19915338
(71) Anmelder: Gräbener Maschinentechnik GmbH & Co. KG, 57250 Netphen-Werthenbach (DE)
(72) Erfinder: Kapp, Dieter, 57234 Wilnsdorf (DE)
(74) Vertreter: Pürckhauer, Rolf, Dipl.-Ing.

(57) **Zusammenfassung**

Es handelt sich um ein Verfahren und eine Anlage (1) zum Bearbeiten und Verbinden der Kanten (2, 3) von Blechen (4, 5) o.dgl.. Die Anlage (1) besteht aus einem Anlagenbett (8), auf dem zwei gegeneinander gerichtete Ständerpaare (9, 10) gelagert sind, wobei die beiden Ständer (11, 12) eines jeden Ständerpaares (9, 10) über eine Traverse (13) miteinander verbunden sind, aus zwei an den Ständern (9, 10) gelagerten, sich etwa über die Länge des Anlagenbettes (8) erstreckenden Auflagetischen (14), wobei an einem der die Auflagetische (14) abstützenden Tischgestelle (15) ein entlang desselben horizontal verfahrbarer Frässupport (16) gelagert ist, und aus zwei an den Traversen (13) vertikal verfahrbar gelagerten Spanntraversen (17). Um ein Verfahren und ein Anlage (1) zu schaffen, bei der auch bei dünnen Blechen die Geradheit der bearbeiteten Kanten zum Verschweißen gewährleistet ist und auch eine rationelle und relativ kostengünstige Fertigung erreicht wird, ist mindestens eines der beiden Ständerpaare (9, 10) horizontal in Richtung zum zweiten Ständerpaar (10) verfahrbar. An einem der beiden Ständerpaare (9, 10) bzw. an der die Ständer (12) dieses Ständerpaares (10) verbindenden Traverse (13) oder einer an einem der beiden Ständerpaare (9, 10) gesondert angeordneten Traverse ist eine vertikal und horizontal verfahrbare Schweißeinrichtung (19) vorgesehen.

## Beschreibung

Die Erfindung bezieht sich auf ein Verfahren zum Bearbeiten und Verbinden der Kanten von Blechen o.dgl. sowie auf eine Anlage zur Durchführung des Verfahrens, bestehend aus einem Anlagenbett, auf dem zwei gegeneinander gerichtete Ständerpaare gelagert sind, wobei die beiden Ständer eines jeden Ständerpaares über eine Traverse miteinander verbunden sind, aus zwei an den Ständern, sich etwa über die Länge des Anlagenbettes erstreckenden Auflagetischen, wobei an einem der Auflagetische ein entlang desselben verfahrbarer Frässupport gelagert ist, und aus zwei an den Traversen vertikal verfahrbar gelagerten Spanntraversen.

Solche Anlagen zum Bearbeiten der Kanten von großen Blechen als Schweißnahtvorbereitung sind bekannt. Dabei wird zunächst ein erstes Blech der Anlage zugeführt, positioniert und gespannt. Nach der Bearbeitung bzw. dem Fräsen der Kante des Bleches wird dasselbe entspannt und durch die Anlage der Bearbeitung der zweiten Kante zugeführt. Das Blech bzw. die Kante wird positioniert und gespannt. Gleichzeitig oder nacheinander wird ein weiteres Blech zugeführt, positioniert und ebenfalls gespannt. Anschließend werden beide Kanten, d.h. die zweite Kante des ersten Bleches sowie die erste Kante des nachfolgenden Bleches gleichzeitig mittels eines Fräswerkzeuges bearbeitet. Danach werden beide Bleche entspannt, wobei jedes bearbeitete Blech markiert werden muß, damit es später mit dem nächsten Blech an den gemeinsam bearbeiteten Kanten verschweißt werden kann.

Bei dünneren Blechen, wie sie immer mehr bei der Herstellung der Außenhaut von Schiffen o.dgl. Anwendung finden, stellt sich jedoch das Problem, daß sich die Bleche nach der Bearbeitung, d.h. nach dem Fräsen und dem anschließenden Lösen der Spanntraversen verziehen, so daß die bearbeiteten Kanten nicht mehr gerade sind und ein Verschweißen der zuvor gemeinsam bearbeiteten Kanten zweier Bleche schwierig ist.

Der Erfindung liegt daher die Aufgabe zugrunde, ein Verfahren sowie eine Anlage der angegebenen Gattung zu schaffen, bei der auch bei dünnen Blechen die Geradheit der bearbeiteten Kanten zum Verschweißen gewährleistet ist, wobei auch eine rationelle und relativ kostengünstige Fertigung erreicht wird.

Diese Aufgabe wird erfindungsgemäß zum einen durch ein Verfahren gemäß dem Kennzeichnungsteil des Patentanspruchs 1 und zum anderen durch eine Anlage gemäß dem Kennzeichnungsteil des Patentanspruchs 2 gelöst.

Zweckmäßige Weiterbildungen der erfindungsgemäßen Anlage sind in den Patentansprüchen 3 bis 5 gekennzeichnet.

Durch das Spannen der Bleche mittels der Spanntraverse während der Bearbeitung, d.h. während des Fräsens, und durch das Verbinden derselben, d.h. durch das Verschweißen ohne ein zwischenzeitliches Lösen der Spanntraverse ist eine exakte Geradheit der Kanten der zu verbindenden Bleche beim Verschweißen gewährleistet.

Außerdem ermöglicht die Erfindung eine rationelle und kostengünstige Fertigung, da das Bearbeiten und das Verbinden der Bleche unmittelbar nacheinander erfolgen, wodurch sich auch der Zeitaufwand für die Fertigung reduziert, was sich positiv auf die Produktivität auswirkt.

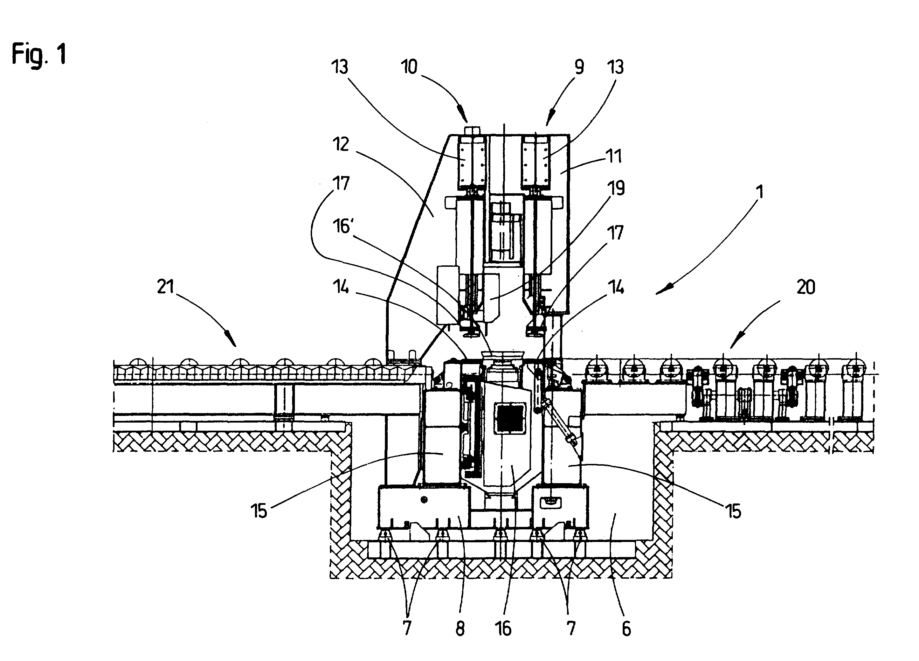

Ein Ausführungsbeispiel der Erfindung wird nunmehr anhand der Zeichnung näher erläutert. Dabei zeigt
- Fig. 1: eine Seitenansicht, z.T. in Schnittdarstellung, einer erfindungsgemäßen Gesamt-Anlage;

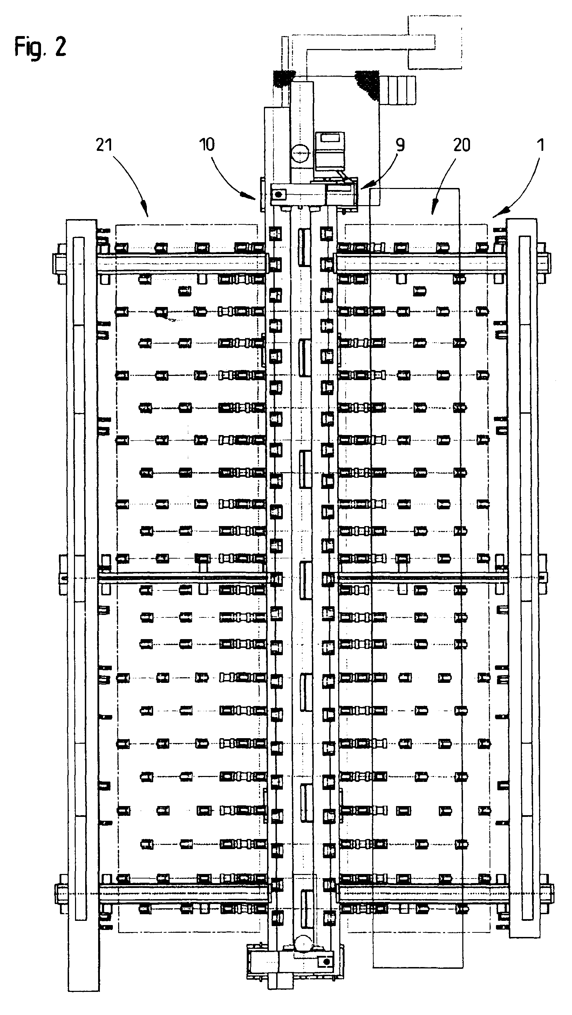

- Fig. 2: eine Draufsicht der Gesamt-Anlage;

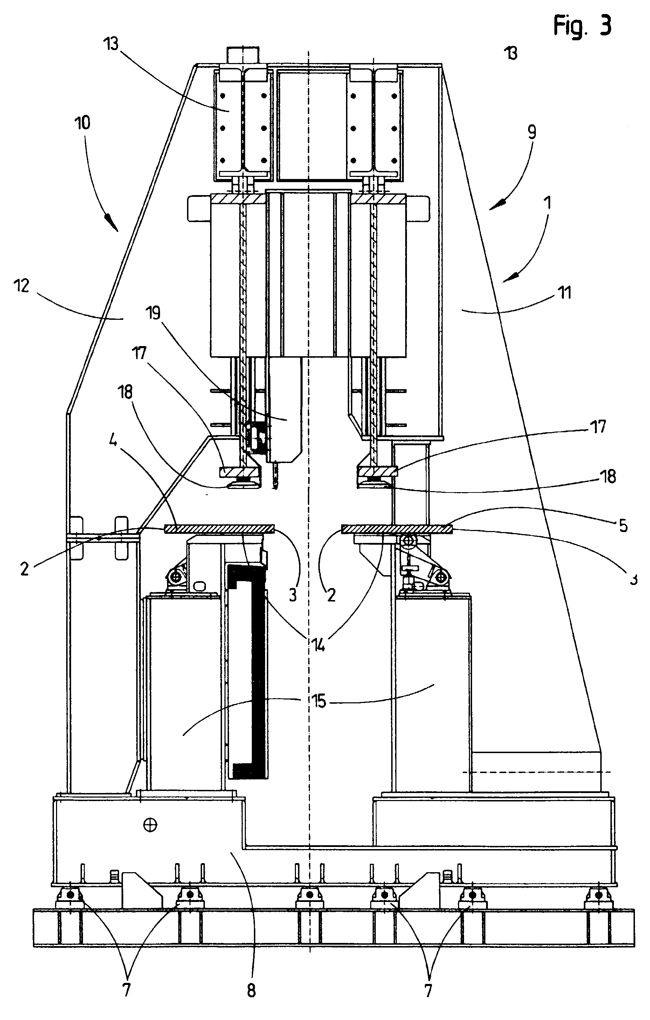

- Fig. 3: eine Schnittdarstellung der Anlage mit in dieselbe eingefahrenen, noch nicht gespannten Blechen;

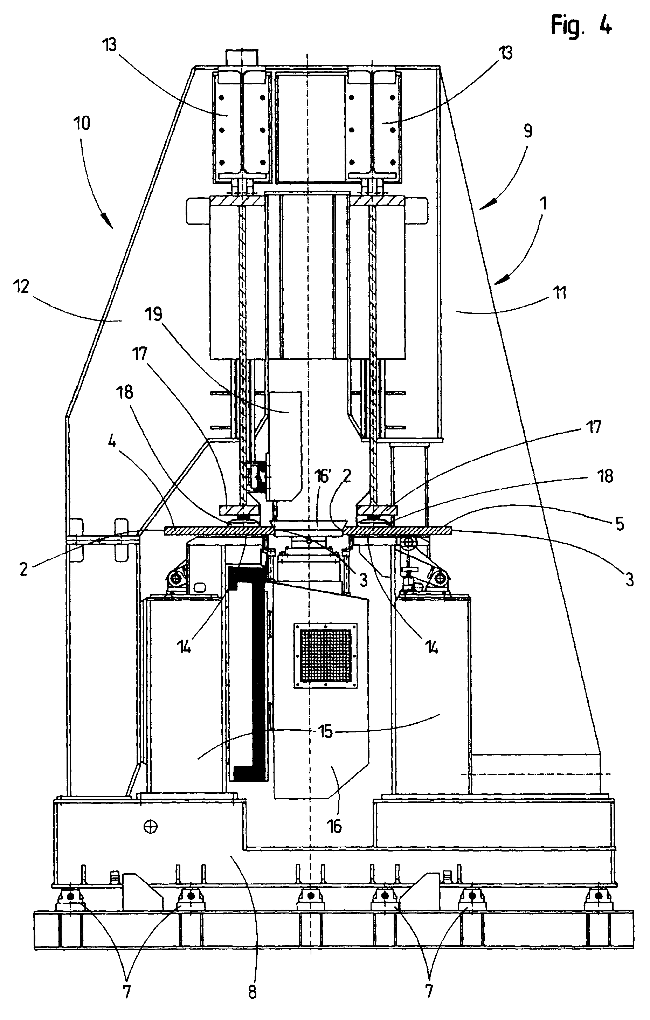

- Fig. 4: eine Schnittdarstellung der Anlage mit gespannten Blechen während der Bearbeitung (Fräsen) der Kanten;

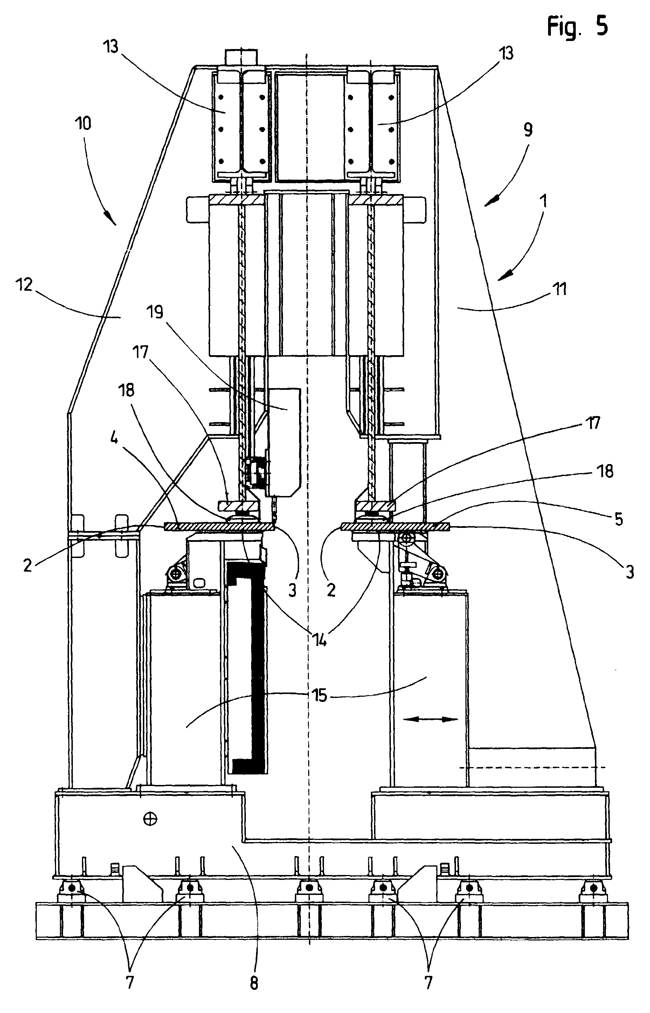

- Fig. 5: eine Schnittdarstellung der Anlage mit gespannten Blechen nach der Bearbeitung derselben und

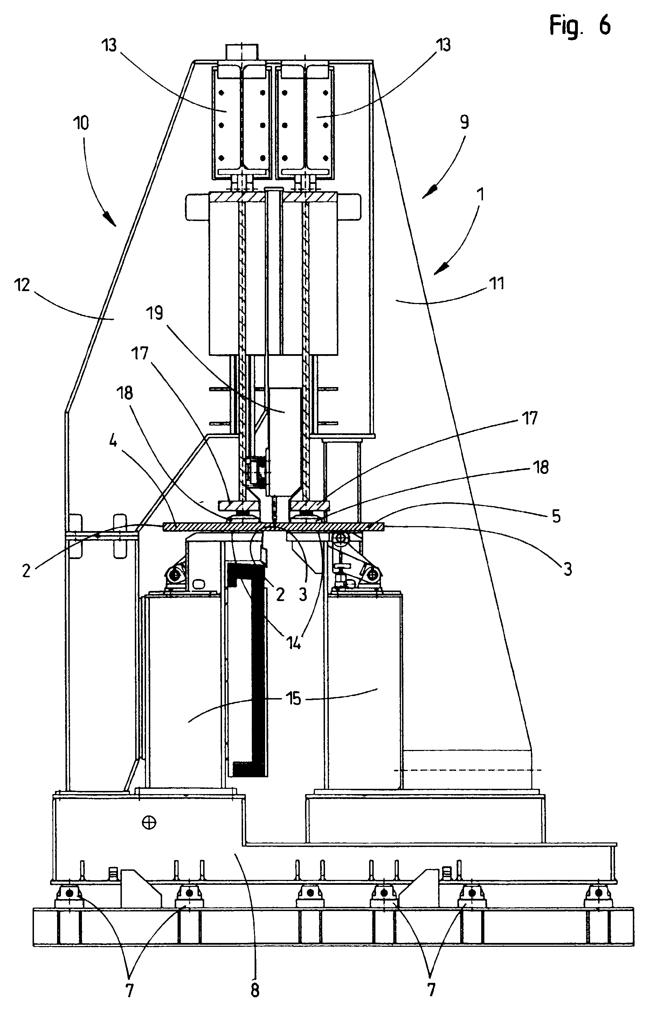

- Fig. 6: eine Schnittdarstellung der Anlage mit gespannten Blechen nach dem Zusammenfahren derselben und während des Verbindens (Schweißen) der Kanten derselben.

Die in den Figuren dargestellte Anlage 1 zum Bearbeiten und Verbinden der Kanten 2, 3 von Blechen 4, 5 o.dgl. besteht aus einem vorzugsweise in einer Fundamentgrube 6 angeordneten, auf ausrichtbaren Maschinenschuhen 7 gelagerten Anlagenbett 8, auf dem zwei gegeneinander gerichtete Ständerpaare 9, 10 gelagert sind. Beide Ständer 11, 12 eines jeden Ständerpaares 9, 10 sind über eine Traverse 13 miteinander verbunden.

An den Ständern 11, 12 ist jeweils ein sich etwa über die Länge des Anlagenbettes 8 erstreckender Auflagetisch 14 vorgesehen. Dabei ist an einem der die Auflagetische 14 abstützenden Tischgestelle 15 ein entlang desselben horizontal verfahrbarer Frässupport 16 mit Fräswerkzeug 16' gelagert. Der Frässupport 16 ist mindestens am einen Ende der Tischgestelle 15 in eine Parkbucht (nicht dargestellt) verfahrbar. Vorzugsweise ist an jedem Ende der Tischgestelle 15 eine Parkbucht vorgesehen.

An den Traversen 13 zwischen den Ständern 11, 12 sind jeweils Spanntraversen 17 vertikal verfahrbar gelagert. An diesen Spanntraversen 17 sind mehrere über deren gesamte Länge vorzugsweise gleichmäßig verteilte Spannteller 18 vorgesehen, die die Bleche 4, 5 auf den Auflagetischen 14 festspannen.

Mindestens eines 9 der beiden Ständerpaare 9, 10 ist gemeinsam mit dem zugehörigen Tischgestell 15 und dem Auflagetisch 14 horizontal in Richtung zum zweiten Ständerpaar 10 verfahrbar.

Desweiteren ist an einem 10 der beiden Ständerpaare 9, 10 bzw. an der die Ständer 12 dieses Ständerpaares 10 verbindenden Traverse 13 oder einer an einem der beiden Ständerpaare 9, 10 gesondert angeordneten Traverse (nicht dargestellt) eine vertikal und horizontal verfahrbare Schweißeinrichtung 19, beispielsweise eine Laser-Schweißeinrichtung vorgesehen. Hier kann selbstverständlich auch jede andere Schweißeinrichtung vorgesehen sein.

Die Anordnung der Schweißeinrichtung 19 an der Traverse 13 oder der gesonderten Traverse ist von der Durchgangsbreite zwischen den Ständerpaaren 9, 10 abhängig. Bei geringen Durchgangsbreiten ist eine direkte Anordnung an der Traverse 13 möglich. Da bei größeren Durchgangsbreiten beim Spannen der Bleche 4, 5 eine gewisse Durchbiegung an der Traverse 13 auftritt, ist es dabei sinnvoll, eine gesonderte Traverse für die Schweißeinrichtung 19 vorzusehen.

Zum Transport der Bleche 4, 5 in die und aus der Anlage 1 sind jeweils eine Zuführvorrichtung 20 und eine Abführvorrichtung 21 vorgesehen, die allgemein bekannt sind und auf die hier nicht näher eingegangen ist.

Nach dieser kurzen Beschreibung der Anlage 1 soll nunmehr das Verfahren zum Bearbeiten und Verbinden der Kanten 2, 3 der Bleche 4, 5 beschrieben werden.

Zunächst wird ein erstes Blech 4 über die Zuführvorrichtung 20 der Anlage 1 zugeführt, wobei die erste Kante 2 des Bleches 4 positioniert und im Ständerpaar 9 mittels der Spanntraverse 17 auf dem Auflagetisch 14 gespannt wird. Der Frässupport 16 mit seinem Fräswerkzeug 16' fährt aus einer seiner Parkbuchten heraus. Zur Bearbeitung der ersten Kante 2 des Bleches 4 fährt das Fräswerkzeug 16' an dieser Kante 2 entlang und fräst diese exakt gerade.

Dieser Arbeitsgang ist nicht immer erforderlich, nämlich dann nicht, wenn die erste Kante 2 des ersten Bleches 4 nicht bearbeitet zu werden braucht.

Nach dem Fräsvorgang wird das Blech entspannt, d.h. die Spanntraverse 17 mit ihren Spanntellern wird wieder in ihre oberste Position verfahren. Das Blech wird anschließend von der Zuführvorrichtung 20 an die Abführvorrichtung 21 übergeben und durch die Anlage 1 soweit hindurchgefahren, bis die korrekte Position zum Bearbeiten der zweiten Kante 3 des Bleches 4 erreicht ist. Dort wird die Kante 3 im zweiten Ständerpaar 10 der Anlage 1 mittels der Spanntraverse 17 auf dem Auflagetisch 14 ebenfalls gespannt.

Ein zweites Blech 5 wird mittels der Zuführvorrichtung 20 der Anlage 1 zugeführt, wobei die erste Kante 2 dieses Bleches 5 positioniert und nun diese im ersten Ständerpaar 9 der Anlage 1 mittels der Spanntraverse 17 auf dem Auflagetisch 14 gespannt wird. Der Frässupport 16 mit seinem Fräswerkzeug 16' fährt aus seiner zuvor angefahrenen Parkbucht heraus. Zur gleichzeitigen Bearbeitung der zweiten Kante 3 des ersten Bleches 4 und der ersten Kante 2 des zweiten Bleches 5 fährt das Fräswerkzeug 16' an den Kanten 2, 3 entlang und fräst dieselben exakt gerade.

Nach dieser Bearbeitung verbleiben beide Spanntraversen 17 mit ihren Spanntellern 18 auf den Blechen 4, 5, so daß die Positionen der Bleche 4, 5 in der Anlage 1 erhalten bleiben. Das verfahrbare Ständerpaar 9 mit dem Tischgestell 13, dem darauf angeordneten Auflagetisch 14 und dem eingespannten Blech 5 wird nun in Richtung zum gegenüberliegenden Ständerpaar 10 so weit verfahren, bis die beiden Kanten 2, 3 der Bleche 4, 5 aneinander anliegen.

Da die Bleche 4, 5 in gespanntem Zustand verbleiben wäre es theoretisch möglich, mit dem Fräswerkzeug 16' eine wellenförmige Kontur an den Kanten 2, 3 anzubringen. Nach dem Zusammenfahren der Bleche 4, 5 würden die Kanten 2, 3 derselben passend ineinandergreifen.

Anschließend wird die Schweißeinrichtung 19 von ihrer Parkposition in die Position oberhalb des Spaltes (≥ 0 mm Abstand) zwischen den beiden Kanten 2, 3 gefahren, wo anschließend der Schweißvorgang beginnt, und die Schweißeinrichtung 19 fährt an den bearbeiteten Kanten 2, 3 der Bleche 4, 5 bzw. am Spalt entlang und verbindet dieselben.

Nach dem Schweißvorgang werden die Bleche 4, 5 entspannt, d.h. die Spanntraversen 17 mit ihren Spanntellern werden wieder in ihre oberste Position verfahren. Das nun aus den Blechen 4, 5 entstandene Gesamtblech wird anschließend von der Zuführvorrichtung 20 an die Abführvorrichtung 21 übergeben und durch die Anlage 1 so weit hindurchgefahren, bis die korrekte Position zum Bearbeiten der zweiten Kante 3 des Bleches 5 erreicht ist. Dort wird die Kante 3 im zweiten Ständerpaar 10 der Anlage 1 mittels der Spanntraverse 17 auf dem Auflagetisch 14 festgespannt, und ein weiteres Blech wird mittels der Zuführvorrichtung 20 der Anlage 1 zugeführt und gespannt, wobei sich nun die zuvor beschriebenen Vorgänge wiederholen.

## Patentansprüche

1. Verfahren zum Bearbeiten und Verbinden der Kanten von Blechen o.dgl., gekennzeichnet durch folgende Verfahrensschritte:
a) ein erstes Blech wird einer Anlage zugeführt, wobei dessen erste Kante positioniert und in der Anlage gespannt wird;
b) ein Fräswerkzeug fährt an der ersten Kante des Bleches entlang und bearbeitet dieselbe;
c) das Blech wird entspannt und durch die Anlage hindurchgefahren, wobei dessen zweite Kante positioniert und diese in der Anlage gespannt wird;
d) ein zweites Blech wird der Anlage zugeführt, wobei dessen erste Kante positioniert und in der Anlage gespannt wird;
e) das Fräswerkzeug fährt an der zweite Kante des ersten Bleches und an der ersten Kante des nachfolgenden (zweiten) Bleches entlang und bearbeitet beide Kanten gleichzeitig;
f) beide Bleche bzw. die bearbeiteten Kanten derselben werden im gespannten Zustand zusammengefahren;
g) eine Schweißeinrichtung fährt an den bearbeiteten Kanten der beiden Bleche entlang und verbindet dieselben;
h) die miteinander verbundenen Bleche werden in der Anlage entspannt und in die nächste Position verfahren.

2. Anlage zur Durchführung des Verfahrens nach Anspruch 1, bestehend aus einem Anlagenbett, auf dem zwei gegeneinander gerichtete Ständerpaare gelagert sind, wobei die beiden Ständer eines jeden Ständerpaares über eine Traverse miteinander verbunden sind, aus zwei an den Ständern gelagerten, sich etwa über die Länge des Anlagenbettes erstreckenden Auflagetischen, wobei an einem der die Auflagetische abstützenden Tischgestelle ein entlang desselben horizontal verfahrbarer Frässupport gelagert ist, und aus zwei an den Traversen vertikal verfahrbar gelagerten Spanntraversen, dadurch gekennzeichnet, daß mindestens eines der beiden Ständerpaare (9, 10) horizontal in Richtung zum zweiten Ständerpaar (10) verfahrbar ist und daß an einem der beiden Ständerpaare (9, 10) bzw. an der die Ständer (12) dieses Ständerpaares (10) verbindenden Traverse (13) oder einer an einem der beiden Ständerpaare (9, 10) gesondert angeordneten Traverse eine vertikal und horizontal verfahrbare Schweißeinrichtung (19) vorgesehen ist.

3. Anlage nach Anspruch 2, dadurch gekennzeichnet, daß die Schweißeinrichtung (19) eine Laser-Schweißeinrichtung ist.

4. Anlage nach Anspruch 2 oder 3, dadurch gekennzeichnet, daß an den Spanntraversen (17) mehrere über deren gesamte Länge gleichmäßig verteilte Spannteller (18) vorgesehen sind.

5. Anlage nach einem der Ansprüche 2 bis 4, dadurch gekennzeichnet, daß derselben eine Zuführvorrichtung (20) und eine Abführvorrichtung (21) zugeordnet sind.
